# EUROPÄISCHE PATENTSCHRIFT

(11) **EP 0 905 061 B1**
(45) Veröffentlichungstag und Bekanntmachung des Hinweises auf die Patenterteilung: **12.02.2003**
(21) Anmeldenummer: 98117599.5
(22) Anmeldetag: 16.09.1998
(51) Int. Cl.: B65G 47/88, B65G 13/075

(54) **Diagonal angeordnete Bedienungsvorrichtung für Containerstops auf Rollbahnen**
Diagonally mounted actuating means for container stops on roller ways
Dispositif de commande monté diagonalement pour des arrêts de containers sur des transporteurs à rouleaux

(30) Priorität: 17.09.1997 CH 219597
(43) Veröffentlichungstag der Anmeldung: 31.03.1999
(73) Patentinhaber: Josef Meyer Waggon AG, 4310 Rheinfelden (CH)
(72) Erfinder: Vetter, Kurt, 5275 Etzgen (CH)
(74) Vertreter: Fleck, Hermann-Josef, Dr.-Ing.

(56) Entgegenhaltungen:
- DE-U- 7 521 531
- DE-U- 8 121 818

## Beschreibung

Die vorliegende Erfindung betrifft eine Bedienungsvorrichtung für Stops zwischen den Rollen einer Rollenbahn, mit welchem Container und Paletten, die sich auf der Rollenbahn befinden, gegen das selbständige und unerwünschte Abrollen gesichert werden.

Eine Bedienungsvorrichtung dieser Art ist in der DE 75 21 531 U1 gezeigt. Zum Anhalten und zur Sicherung von auf Rollenbahnen transportierten und auf Ladeplattformen liegenden Gütern ist ein Anschlag in Form eines Hobelarms vorhanden, und mit dem Hebel ist ein Stop gebildet.

Arretierungen auf Rollenbahnen werden eingesetzt, um das selbstständige Bewegen des über die Rollenbahn beförderten Gutes zu vermeiden. In Rollenbahnen wie sie z.B. in automatischen Lagern Verwendung finden, werden hydraulisch oder elektrisch betätigte Arretierungen eingesetzt. Für Transportanhänger, wie sie auf Flughäfen für den Transport von Containern und Paletten eingesetzt werden, müssen handbediente Arretierungen verwendet werden.

Man spricht allgemein von Stops, da diese Arretierungen die Container und Paletten vor einem Verschieben auf der Rollenbahn stoppen.

Der Einsatz auf dem Flughafengelände stellt an diese Stops spezielle Anforderungen. Sie müssen in erster Linie ein selbstständiges Verschieben der Container und Paletten verhindern. Da die Fläche der Flughäfen in den meisten Fällen nicht eben ist, kann es sein, dass bei einem Schlag der Container oder die Palette über den Stop springt. Der Stop muss deshalb noch eine Vorrichtung zum Niederhalten des Gebindes aufweisen.

Diese Stops werden mit speziellen Vorrichtungen von Hand bedient. Sie müssen deshalb leichtgängig sein, damit sie durch jede Person bedient werden können. Heute verwendete Systeme sehen vor, dass einer oder mehrere Stops auf einer Führungswelle befestigt sind, welche in ihrer Längasachse auf beiden Seiten einen Handgriff aufweist, mit dem dieselbe bedient werden kann. Normalerweise bringt man mehrere Stops über die Breite eines Transportanhängers und an jedem Ende der Rollenbahn an. Die Stops sind also auf einer durchgehenden Führungswelle montiert, welche von beiden Seiten der Rollenbahn bedient werden kann. Seitlich ist die Rollenbahn durch eine Führung für die Container oder Paletten ausgerüstet.

Diese auf Flugplätzen eingesetzten Dollies und Transportanhänger weisen eine rechteckige Rollenplattform auf. In vielen Fällen kann diese auf dem Fahrgestell so gedreht werden, dass die Verschieberichtung der Rollenbahn für den Transport parallel und für den Verlad quer zur Fahrtrichtung des Transportanhängers angeordnet ist.

Beim Umladen steht die Rollenbahn quer zur Fahrtrichtung des Transportanhängers. Die Stops, welche für das Umladen durch eine Vorrichtung gelöst werden müssen, befinden sich dabei auf den beiden Seiten des Transportanhängers. Die zu lösenden Stops sind auf der Seite des für das Umladen bereitstehenden Fahrzeuges. Das bedeutet, dass sich die Person für die Bedienung der Stops im Gefahrenbereich auf der Seite auf, der umgeladen wird, aufhalten muss. Um dies zu vermeiden, müsste diese Person beim Umladen über die Deichsel des im Transportzug eingeordneten Transportanhängers steigen, um die Gefahrenzone zu verlassen. Dies birgt wieder die Gefahr, dass sich die Person genau dann zwischen zwei Transportanhängern befindet, wenn der Zug verschoben wird.

Damit das Bedienungspersonal nicht ständig um das Gerät herum gehen muss, wäre es wünschbar, von einer Seite aus auch die Stops auf der anderen Seite der Rollenbahn bedienen zu können.

Weil diese Stops sehr stabil und robust gebaut werden müssen, ist deren Bedienung mit Kraftaufwand verbunden. Der erforderliche, große Kraftaufwand schließt meist die gleichzeitige Bedienung mehrerer Stop mit einem Hebel aus. Bei robusten Konstruktionen erhöht der Eigenwiderstand und die Reibung den Kraftaufwand dermaßen, dass die Stops nicht mehr bedient werden können.

Werden die Kräfte für die Übertragung der Bewegung über leichtgängige, filigrane Gestänge gelöst, sind diese dem rohen Einsatz nicht gewachsen und anfällig für Reparaturen.

Die vorliegende Erfindung stellt sich nunmehr die Aufgabe, eine Vorrichtung für die Bedienung von Haltevorrichtungen der eingangs genannten Art derart zu verbessern, dass deren Auslösung von beiden Stirnseiten der Rollenbahn mit moderatem Kraftaufwand ermöglicht wird.

Diese Aufgabe löst eine Vorrichtung mit den Merkmalen des Patentanspruchs 1. Weitere erfindungsgemäße Merkmale gehen aus den abhängigen Ansprüchen hervor und deren Vorteile sind in der nachfolgenden Beschreibung erläutert.

In der Zeichnung zeigt:
- Fig. 1: eine perspektivische Darstellung einer Vorrichtung, welche in einer Rollenbahn integriert ist,
- Fig. 2 bis 4: eine seitliche Ansicht der Rollenbahn mit Container ohne Auflage, respektive mit Palette, wobei gegenüber Fig. 1 eine Winkellage zwischen einem Stop und einem Mitnehmer unterschiedlich ist und
- Fig. 5: eine Aufsicht und Systemdarstellung der Vorrichtung nach Fig. 1.

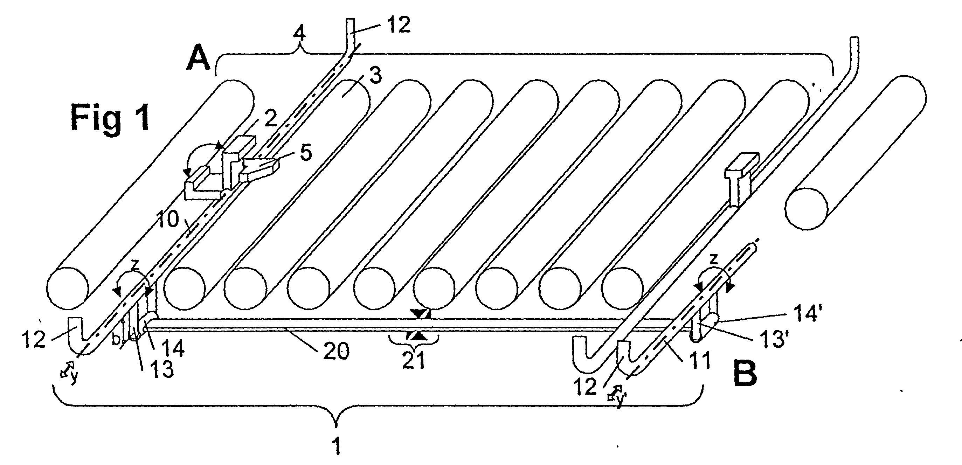

In Fig. 1 ist die Vorrichtung 1 mit einem Stop 2 dargestellt, wie sie beispielhaft in einer Rollenbahn integriert ist. Die Führungswelle 10 ist von beiden Seiten der Rollenbahn 4 mittels Handgriffen 12 bedienbar. Durch die Verschiebung der Führungswelle 10 in Richtung y wird der Stop 2 aus der Raste 5 gezogen, so dass der Handgriff 12 um die Führungswelle 10 in Richtung z gedreht werden kann. Diese Drehung erfolgt normalerweise um 90°. Befindet sich der Stop 2 in der Waagrechten, kann die Führungswelle 10 wieder in ihre ursprüngliche Position zurückgleiten und der Stop 2 wird durch die Raste 5 wieder gesichert.

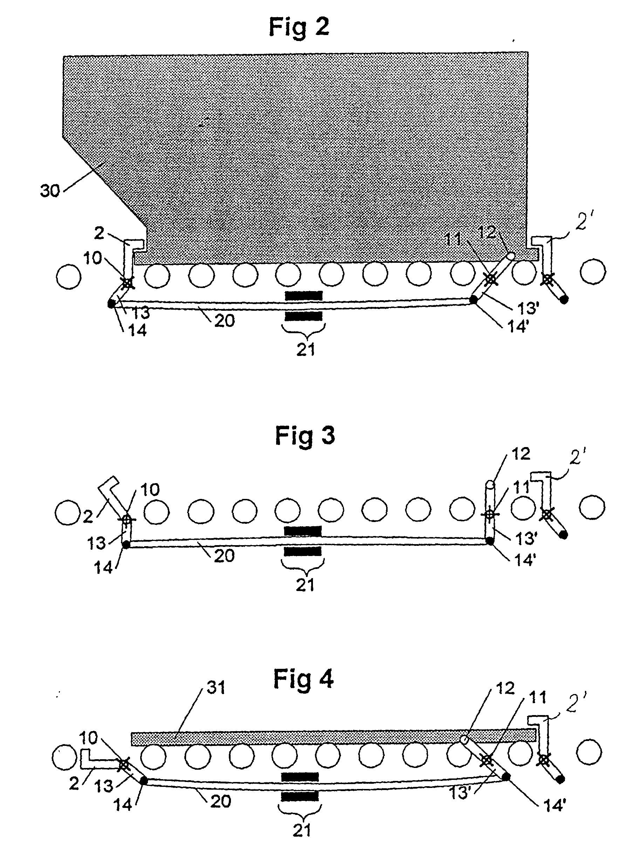

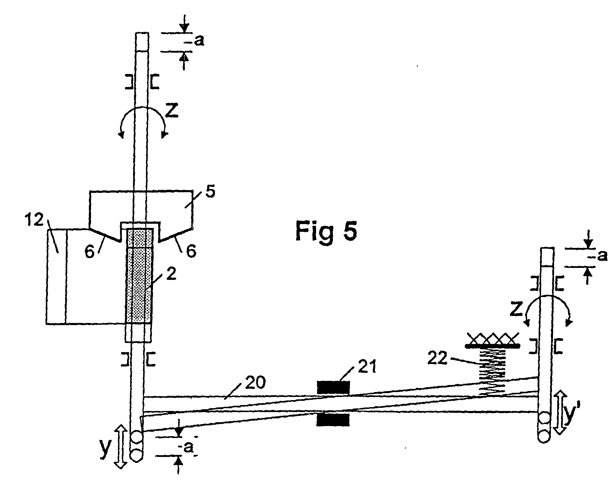

Verschiedene Positionen werden in den Fig. 2 bis 4 gezeigt, wobei gegenüber den Ausführungsbeispielen nach den Fig. 1 und 5 eine Winkellage zwischen dem Stop 2 und dem Mitnehmer 13 unterschiedlich ist. Gemäß Fig. 2 befindet sich auf der Rollenbahn 4 ein Container 30, in Fig. 4 eine Palette 31.

Über die Länge der Führungswelle 10 können beliebig viele Stops 2 angeordnet sein, wobei nur ein Stop 2 durch eine Raste 5 gesichert ist.

Um nach jedem Bedienungsvorgang an der Führungswelle 10 den Stop 2 wieder in die Sicherung durch die Raste 5 zu bringen, wird eine Feder 22 angebracht, mit der die Führungswelle 10 in der Gegenrichtung von y bewegt und damit den Stop 2 in seine Sicherheitsstellung bringt.

Die Führungswelle 10 ist auch in der erfindungsgemäßen Vorrichtung 1 das wichtigste Element. An ihr wird wie in Fig. 1 gezeigt, ein Mitnehmer 13 angebracht, der von der Führungswelle 10 in einer Distanz b ein Scharnier 14 aufweist. Über dieses Scharnier 14 wird eine Umlenkstange 20 bewegt. Diese Umlenkstange 20 wird mittig durch eine Führung 21 horizontal und vertikal gehalten, ist aber in ihrer Längsachse bewegbar.

Wird nun die Führungswelle 10 gezogen und gedreht, um den Stop 2 aus der Raste 5 zu lösen, zu drehen und wieder in die Raste 5 einzuschieben, beschreibt der Mitnehmer 13 einen Radius um die Achse der Führungswelle. Die tangentiale Distanz dieser Bewegung wirkt sich über Scharnier 14 auf die Umlenkstange 20 aus, indem sich diese in der Längsachse bewegt. Die radiale Distanz wirkt sich auf die Umlenkstange 20 als Auf- und Abbewegung aus.

In Längsrichtung der Rollenbahn 4 befindet sich eine Betätigungswelle 11. Diese ist ebenfalls drehbar und in Achsrichtung y' verschiebbar gelagert. Diese Betätigungswelle 11 ist über den Mitnehmer 13' und das Scharnier 14' mit der Umlenkstange 20 verbunden.

Führt man nun mit der Führungswelle 10 eine Drehbewegung aus, folgt die Betätigungswelle 11 ebenfalls mit einer Drehbewegung, weil sie über die Umlenkstange 20 mit der Führungswelle 10 verbunden ist. Daraus folgt der Sinn der Erfindung, dass umgekehrt über die Betätigungswelle 11 mit Handgriff 12 die Führungswelle 10 bewegt werden kann, womit der Stop 2 bewegt wird.

Um die Bewegung in der Längsachse der Führungswelle 10 auf die Betätigungswelle 11 zu übertragen, wird die Umlenkstange 20 mittig durch eine Führung 21 vertikal und horizontal gehalten. Dadurch dreht sich die Umlenkstange 20, wenn die Führungswelle 10 axial bewegt wird um einen theoretischen Drehpunkt und gibt diese Bewegung in entgegengesetzter Richtung auf die Betätigungswelle 11 weiter. Dieser Effekt wird dadurch ermöglicht, dass an den Mitnehmern 13 und 13' Scharniere 14 und 14' befestigt sind, die nicht nur axiale Bewegungen zulassen, sondern auch eine Drehung in horizontaler Richtung ermöglichen. Am besten geeignet wären dafür zum Beispiel kugelige Lagerungen.

Die Umlenkstange 20 kann sich in ihrer Längsachse in der Führung verschieben. Der tangentiale Weg der Drehbewegung von Führungswelle 10 und Betätigungswelle 11 kann dadurch übertragen werden. Der radiale Weg der Umlenkstange 10, der durch Drehbewegung der Scharniere 14 und 14' um die Achsen ihrer Wellen 10 und 11 entsteht, wird in der Führung 21 aufgefangen.

Damit die Bewegung in der Längsachse und die Drehbewegung der Wellen 10 und 11 mit der Umlenkstange 20 übertragen werden können, muss diese sowohl auf Knickung als auch auf Biegung in der horizontalen Richtung steif sein. Um den aus der Drehbewegung der Mitnehmer 13 und 13' entstehenden vertikalen Weg aufzufangen, muss die Umlenkstange in vertikaler Richtung auf Biegung elastisch sein. Auf diese Art erreicht man eine genaue Führung, ohne dass die für die Bedienung der Vorrichtung 1 notwendigen Kräfte zu groß werden.

Die oben beschriebene Vorrichtung 1 ermöglicht es, dass die beiden Wellen 10 und 11 dieselbe Drehbewegung ausführen. Sie ermöglicht aber auch, dass sich bei achsialer Verschiebung von Führungswelle 10 oder Betätigungswelle 11 die andere Welle 10 oder 11 in der entgegengesetzten Richtung bewegt. Unabhängig davon, ob an der Führungswelle 10 oder an der Betätigungswelle 11 manipuliert wird, wird sich dadurch der Stop 2 in der gewünschten Art bewegen lassen.

Bringt man auf einer viereckigen Rollenbahn 4 für die gegenseitig angeordneten Stops 2 und 2' je eine solche Vorrichtung an, so können alle Stops 2 und 2' von den beiden Eckpunkten A und B aus bedient werden.

## Patentansprüche

1. Bedienungsvorrichtung für Stops (2) zwischen den Rollen (3) einer Rollenbahn (4), mit welchen Container (30) und Paletten (31), die sich auf der Rollenbahn (4) befinden, gegen das selbstständige und unerwünschte Abrollen gesichert werden,
**dadurch gekennzeichnet,**
**dass** der Stop (2) zum Einrücken in eine Raste (5) auf einer in ihrer Längsrichtung beweglichen und drehbar gelagerten Führungswelle (10) befestigt ist, welche einen Mitnehmer (13) aufweist, über welchen die Führungswelle (10) mit einer in bezug auf die Rollenbahn (4) in Längsrichtung versetzten und in ihrer Längsrichtung beweglichen sowie drehbar gelagerten Betätigungswelle (11) mittels Umlenkstange (20) und weiterem Mitnehmer (13') verbunden ist, wobei die Führungswelle (10) und die Betätigungswelle (11) mit einem Handgriff (12) versehen sind und die Umlenkstange (20) bezüglich Einwirkung von Kräften in horizontaler Richtung, die durch die Längsrichtung der Umlenkstange (20) und die Längsachse der Führungswelle (10) oder Betätigungswelle (11) gebildet ist, biegesteif und bezüglich Einwirkung von zur horizontalen Richtung vertikalen Kräften biegeelastisch ist und die Umlenkstange (20) im Mittelbereich durch eine Führung (21) horizontal und vertikal gehalten und in ihrer Längsrichtung beweglich geführt wird.

2. Bedienungsvorrichtung gemäß Anspruch 1,
**dadurch gekennzeichnet,**
**dass** die Umlenkstange (20) mit den Mitnehmern (13, 13') durch Scharniere (14, 14') verbunden ist.

3. Bedienungsvorrichtung gemäß Anspruch 2,
**dadurch gekennzeichnet,**
**dass** die Scharniere (14, 14') nebst der Drehbewegung auch in ihrer Achsrichtung eine Bewegung zulassen.

4. Bedienungsvorrichtung gemäß Anspruch 1,
**dadurch gekennzeichnet,**
**dass** die Bedienungsvorrichtung (1) um einen theoretischen Drehpunkt (x) in der Führung (21) drehend, um eine Distanz (a) horizontal beweglich ist.

5. Bedienungsvorrichtung gemäß Ansprüche 1 bis 4,
**dadurch gekennzeichnet,**
**dass** die Vorrichtung (1) durch eine Feder (22) in einer Position gehalten wird und nach der Bedienung selbstständig in diese Position zurückkehrt.

6. Bedienungsvorrichtung gemäß Anspruch 1 und 5,
**dadurch gekennzeichnet,**
**dass** der Stop (2) in der durch eine Feder (22) bestimmten Position der Vorrichtung (1) in einer Raste (5) entweder die Rollenbahn (4) freigebend abgeklappt, oder zur Sicherung der Container (30) und Palette (31) aufgestellt, gehalten wird.

7. Bedienungsvorrichtung gemäß Anspruch 6,
**dadurch gekennzeichnet,**
**dass** die Raste (5) keilförmige Anlaufflächen (6) aufweist.

## Claims

1. Control device for stops (2) between the rollers (3) of a roller-type conveyor (4), by means of which stops containers (30) and pallets (31), situated on the roller-type conveyor (4), are prevented from rolling-off independently and undesirably, **characterised in that**, for engagement in a notch (5), the stop (2) is fastened on a rotatably mounted guide shaft (10), which is displaceable in its longitudinal direction and has an entrainment means (13), via which the guide shaft (10) is connected to a rotatably mounted actuating shaft (11), which is set in the longitudinal direction relative to the roller-type conveyor (4) and is displaceable in its longitudinal direction, by means of guide rod (20) and additional entrainment means (13'), the guide shaft (10) and the actuating shaft (11) being provided with a handle (12), and the guide rod (20) being resistant to bending in respect of the effect of forces in the horizontal direction, which is formed by the longitudinal direction of the guide rod (20) and the longitudinal axis of the guide shaft (10) or actuating shaft (11), and being flexible in respect of the effect of forces which are vertical relative to the horizontal direction, and the guide rod (20) being retained horizontally and vertically in the central region by a guide means (21) and displaceably guided in its longitudinal direction.

2. Control device according to claim 1, **characterised in that** the guide rod (20) is connected to the entrainment means (13, 13') by hinges (14, 14').

3. Control device according to claim 2, **characterised in that** the hinges (14, 14') also permit a movement in their axial direction in addition to the rotary movement.

4. Control device according to claim 1, **characterised in that** the control device (1) is horizontally displaceable over a distance (a) so as to rotate about a theoretical pivot point (x) in the guide means (21).

5. Control device according to claims 1 to 4, **characterised in that** the device (1) is retained in a position by a spring (22), and it automatically returns to this position after the control operation.

6. Control device according to claims 1 and 5, **characterised in that** the stop (2) is retained in a notch (5) in the position of the device (1) determined by a spring (22), either pivoted downwardly so as to release the roller-type conveyor (4) or raised to secure the containers (30) and pallet (31).

7. Control device according to claim 6, **characterised in that** the notch (5) has wedge-shaped end faces (6).

## Revendications

1. Dispositif de commande pour des arrêts (2) entre les rouleaux (3) d'un transporteur à rouleaux (4) par lesquels des conteneurs (30) et des palettes (31), qui se trouvent sur le transporteur à rouleaux (4), sont arrêtés contre le roulement indépendant et non souhaité,
**caractérisé en ce**
**que** l'arrêt (2) est fixé sur un arbre de guidage (10) monté mobile et pivotant dans sa direction longitudinale pour la venue en prise dans un arrêt instantané (5), lequel présente un entraîneur (13) par lequel l'arbre de guidage (10) est relié à un arbre d'actionnement (11), monté décalé par rapport au transporteur à rouleaux (4) en direction longitudinale et mobile ainsi que pivotant dans sa direction longitudinale, au moyen d'une tige de renvoi (20) et d'un autre entraîneur (13'), l'arbre de guidage (10) et l'arbre d'actionnement (11) étant munis d'un poignée (12) et la tige de renvoi (20) étant rigide en flexion, vis à vis de l'action de forces en direction horizontale qui est formée à travers la direction longitudinale de la tige de renvoi (20) et l'axe longitudinal de l'arbre de guidage (10) ou de l'arbre d'actionnement (11), et élastique en flexion vis à vis de l'action de forces verticales par rapport à la direction horizontale et la tige de renvoi (20) étant maintenue horizontalement et verticalement, dans la zone médiane, par un guidage (21) et guidée à déplacement dans sa direction longitudinale.

2. Dispositif de commande selon la revendication 1,
**caractérisé en ce**
**que** la tige de renvoi (2) est reliée aux entraîneurs (13, 13') par des charnières (14, 14').

3. Dispositif de commande selon la revendication 2,
**caractérisé en ce**
**que** les charnières (14, 14') permettent, en plus du déplacement en rotation, également un déplacement dans leur direction axiale.

4. Dispositif de commande selon la revendication 1,
**caractérisé en ce**
**que** le dispositif de commande (1) est mobile, en rotation dans le guidage (21) autour d'un point de rotation théorique (x), horizontalement d'une distance (a).

5. Dispositif de commande selon l'une des revendications 1 à 4,
**caractérisé en ce**
**que** le dispositif (1) est maintenu dans une position par un ressort (22) et revient automatiquement dans cette position après la commande.

6. Dispositif de commande selon l'une des revendications 1 à 5,
**caractérisé en ce**
**que** l'arrêt (2) est maintenu soit rabattu dans un arrêt instantané (5) dans la position du dispositif (1) déterminée par un ressort (22) en libérant le transporteur à rouleaux (4), soit dressé pour l'arrêt du conteneur (30) et de la palette (31).

7. Dispositif de commande selon la revendication 6,
**caractérisé en ce**
**que** l'arrêt instantané (5) présente des surfaces de départ (6) cunéiformes.
